Europäisches Patentamt

European Patent Office

Office européen des brevets

(11) Veröffentlichungsnummer: **0 092 751**

**A1**

## (12) EUROPÄISCHE PATENTANMELDUNG

(21) Anmeldenummer: **83103683.5**

(22) Anmeldetag: **15.04.83**

(51) Int. Cl.³: **F 25 B 31/02**
**H 02 P 6/02**

(30) Priorität: **28.04.82 DE 3215814**

(43) Veröffentlichungstag der Anmeldung:
**02.11.83 Patentblatt 83/44**

(84) Benannte Vertragsstaaten:
**AT BE CH DE FR GB IT LI NL SE**

(71) Anmelder: **SIEMENS AKTIENGESELLSCHAFT**
**Berlin und München Wittelsbacherplatz 2**
**D-8000 München 2(DE)**

(72) Erfinder: **Leitgeb, Wilhelm, Dr.**
**Martin-Luther-Strasse 26**
**D-8740 Bad Neustadt/Saale(DE)**

(72) Erfinder: **Schönwald, Siegfried**
**Burgstrasse 18**
**D-8740 Bad Neustadt/Saale(DE)**

(54) **Kompressoraggregat für eine Wärmepumpenanlage.**

(57) Die Erfindung betrifft ein Kompressoraggregat für eine Wärmepumpenanlage, bei dem als Antrieb für den Kompressor ein Elektromotor vorgesehen ist. Um einen Betrieb des Kompressoraggregates am elektrischen Netz ohne unzulässig hohe Einschaltströme zu ermöglichen, wird vorgeschlagen, daß der Kompressor von einem dauermagneterregten, mit einer elektronischen Kommutierungseinrichtung (4) versehenen Gleichstrommotor (3) angetrieben ist, der mittels eines über einen Gleichrichter (19) vom elektrischen Netz gespeisten Gleichspannungssteller (15) steuerbar ist.

FIG 1

EP 0 092 751 A1

Croydon Printing Company Ltd

SIEMENS AKTIENGESELLSCHAFT     Unser Zeichen
Berlin und München            VPA 82 P 3 1 2 8 E

Kompressoraggregat für eine Wärmepumpenanlage

Die Erfindung betrifft ein Kompressoraggregat für eine
Wärmepumpenanlage, bei dem als Antrieb für den Kompressor
ein Elektromotor vorgesehen ist.

Bei solchen handelsüblichen Kompressoraggregaten sind als
Antrieb asynchrone Drehstrommotoren vorgesehen. Die Antriebsleistung solcher Kompressoraggregate für Wärmepumpenanlagen
zur Beheizung von Ein- und Mehrfamilienhäusern liegen in
dem Bereich von etwa 2 bis 6 kW. Bei dieser Leistungsgröße
ergeben sich Einschaltströme, die bei 30 A und darüber
liegen. In schwachen Netzen können durch solche Einschaltströme kurzzeitige Spannungsabsenkungen in einer z.B. für
elektronische Geräte oder Beleuchtungseinrichtungen nicht
mehr zulässigen Höhe auftreten. Um derartige Störungen gering zu halten, wird von den EVU's nur eine bestimmte Anzahl
von Einschaltungen, z.B. drei Einschaltungen pro Stunde,
zugelassen. Hierdurch wird der Betrieb einer Wärmepumpenanlage sehr eingeschränkt. Man hat auch schon versucht,
durch Zusatzeinrichtungen, beispielsweise durch Spannungsabsenkung am Motor und durch gleichzeitige Druckentlastung
des Kompressors, den Einschaltstrom zu verringern. Diese
Maßnahmen sind jedoch aufwendig und in ihrer Wirkung unbefriedigend.

Der Erfindung liegt die Aufgabe zugrunde, ein Kompressoraggregat der eingangs beschriebenen Art so auszubilden, daß
der Einschaltstrom ohne zusätzliche Maßnahmen auf niedrigere Werte begrenzbar ist.

Die Lösung der gestellten Aufgabe gelingt nach der Erfindung dadurch, daß der Kompressor von einem dauermagneterregten, mit einer elektronischen Kommutierungseinrichtung

Ml 2 Ca / 26.04.1982

versehenen Gleichstrommotor angetrieben ist, der mittels eines über einen Gleichrichter vom elektrischen Netz gespeisten Gleichspannungsstellers steuerbar ist. Mittels des Gleichspannungsstellers kann der Einschaltstrom auf einfache Weise begrenzt werden. Es besteht die Möglichkeit, den Einschaltstrom auf die Größe des Betriebsstromes zu begrenzen.

Eine Regelung der Kompressorleistung ist dadurch in einfacher Weise möglich, daß als Kompressor ein Radialkolbenkompressor vorgesehen ist. Ein solcher Kompressor besitzt keine Ventile und kann daher in einem großen Drehzahlbereich betrieben werden. Die Einstellung verschiedener Drehzahlen läßt sich mit dem Gleichstrommotor ohne besonderen Regelungsaufwand erreichen.

Der Antrieb des Radialkolbenkompressors mit einem Außenläufermotor hat den Vorteil, daß bei dem als topfförmiges Gehäuse ausgebildeten Außenläufer des Gleichstrommotors die Dauermagnete in einfacher Weise an der Innenwand des Gehäuses angeordnet werden können, da die Fliehkräfte direkt von der Gehäusewand aufgenommen werden.

Der Einbau aller Komponenten des Kompressoraggregates in eine hermetisch abgedichtete Kapsel und die Kühlung derselben durch das Kältemittel des Aggregates ermöglicht die Nutzung der Verlustwärme der einzelnen Komponenten für die Wärmepumpenanlage.

Anhand eines in der Zeichnung dargestellten Ausführungsbeispiels wird der Anmeldungsgegenstand nachfolgend näher beschrieben. Es zeigt

Fig. 1 ein Kompressoraggregat, dessen Kompressor mit einem dauermagneterregten Gleichstrommotor gekuppelt ist,
Fig. 2 ein elektrisches Prinzipschaltbild des Gleichstrommotorantriebes.

Mit 1 ist eine hermetisch abgedichtete Kapsel bezeichnet, in der ein Radialkolbenkompressor 2 und ein dauermagneterregter Gleichstrommotor 3 einschließlich einer elektronischen Kommutierungseinrichtung 4 angeordnet sind. Der Gleichstrommotor 3 ist als Außenläufermotor ausgebildet. Der Außenläufer 5 besteht aus einem topfförmigen Gehäuse, an dessen Innenwand Dauermagnete 6 angebracht sind. Der Innenständer 7 ist auf einer feststehenden Achse 8 angeordnet. Auf dieser Achse 8 ist auch der Zylinderblock 9 des Radialkolbenkompressors 2 drehbar gelagert. Über an dem Außenläufer 5 vorgesehene Arme 10 ist der Zylinderblock 9 mit dem Außenläufer 5 gekuppelt und wird von diesem angetrieben.

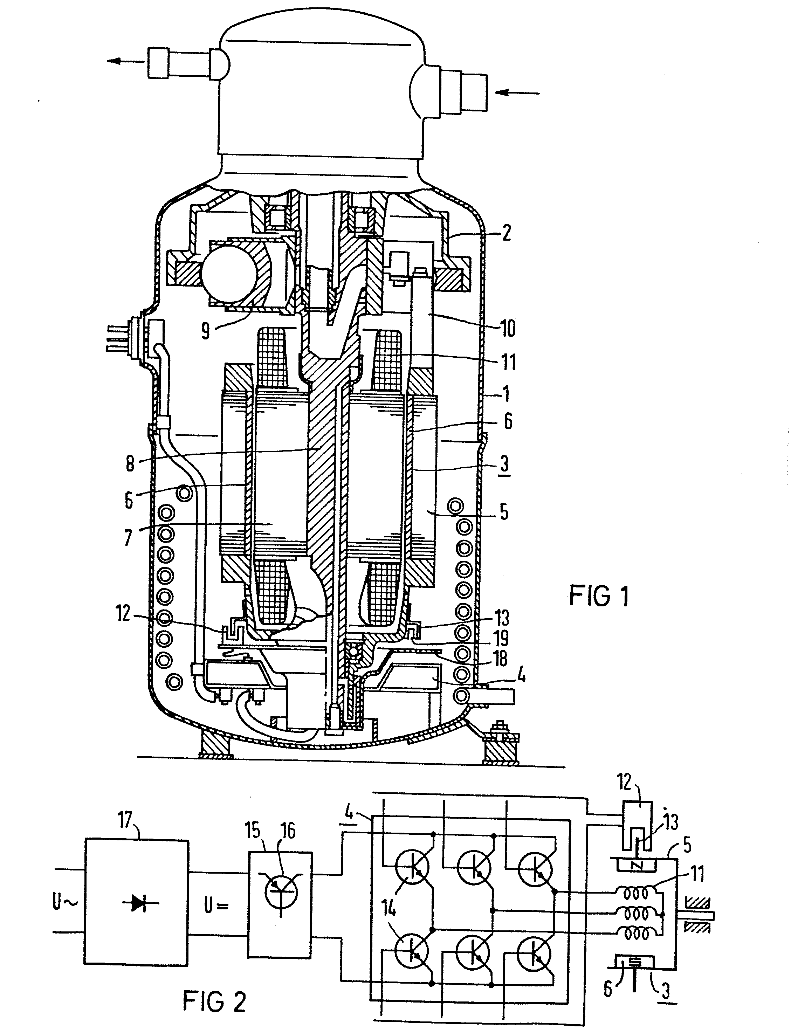

Die zur Ansteuerung der Ständerwicklung 11 notwendige Erfassung der Läuferstellung erfolgt über einen Geber, der beispielsweise aus einer mit dem Außenläufer 5 verbundenen, zwischen den beiden Schenkeln eines U-förmigen Halters 12 rotierenden Blende 13 bestehen kann. An dem einen Schenkel des U-förmigen Halters 12 kann beispielsweise eine Lichtquelle und an dem anderen Schenkel ein lichtempfindlicher Empfänger (z.B. Fotowiderstand) angeordnet werden. Die Blende 13 weist eine auf die Anzahl der Läuferpole bezogene Anzahl von Durchbrechungen 19 auf, deren Lage am Umfang der Blende 13 auf die Lage der Läuferpole bezogen ist. Auf diese Weise werden an dem lichtempfindlichen Empfänger von der Läuferstellung abhängige Signale erzeugt, die zum Steuern der in der Kommutierungseinrichtung 4 vorgesehenen Halbleiterschaltelemente 14 dienen, wie dies in Fig. 2 angedeutet ist. Für den Rotorlagegeber können auch magnetfeldempfindliche Elemente verwendet werden.

Der Kommutierungseinrichtung 4 ist ein Gleichspannungssteller 15 vorgeschaltet, dessen Steuerelement, z.B. ein Transistor 16, stromabhängig gesteuert wird. Der Gleich- spannungssteller 15 ist an den Gleichspannungsausgang eines Gleichrichters 17 angeschlossen und erhält von diesem eine Gleichspannung U_ zugeführt. Der Gleichrichter 17 liegt mit seinem Wechselspannungseingang an der Netzspannung $U_\sim$.

Durch die stromabhängige Steuerung des Gleichspannungsstellers 15 kann der Anfahrstrom des Gleichstrommotors 3 so eingestellt werden, daß auf der Wechselspannungsseite des Gleichrichters 17 keine unzulässigen Werte auftreten. Infolge des Einsatzes einer dauermagneterregten Gleichstrommaschine ergibt sich bei gleicher Betriebsweise gegenüber einer mit einem Asynchronmotor betriebenen Anlage wegen der geringeren Verluste der Gleichstrommaschine ein höherer Wirkungsgrad.

Bei dem in Fig. 1 dargestellten Ausführungsbeispiel ist die Kommutierungseinrichtung 4 räumlich von einer an der Achse 8 befestigten und den U-förmigen Halter 12 aufnehmenden Tragplatte 18 getrennt angeordnet. Durch diese getrennte Anordnung der Kommutierungseinrichtung 4 werden die Schwingungen des Kompressoraggregates von dieser ferngehalten. Ist eine schwingungsisolierte Anordnung der Kommutierungseinrichtung 4 nicht erforderlich, kann diese ebenfalls an der Tragplatte 18 angeordnet werden.

Ferner ist bei dem Schaltbild nach Fig. 2 ein gesonderter Spannungssteller vorgesehen. Die Funktion eines solchen Spannungsstellers kann auch von den Schaltelementen der Kommutierungseinrichtung 4 übernommen werden, indem diese entsprechend gesteuert werden.

2 Figuren
5 Patentansprüche

Patentansprüche

1. Kompressoraggregat für eine Wärmepumpenanlage, bei dem als Antrieb für den Kompressor ein Elektromotor vorgesehen ist, d a d u r c h   g e k e n n z e i c h n e t , daß der Kompressor von einem dauermagneterregten, mit einer elektronischen Kommutierungseinrichtung (4) versehenen Gleichstrommotor (3) angetrieben ist, der mittels eines über einen Gleichrichter (17) vom elektrischen Netz gespeisten Gleichspannungssteller (15) steuerbar ist.

2. Kompressoraggregat nach Anspruch 1, d a d u r c h   g e k e n n z e i c h n e t , daß als Kompressor ein Radialkolbenkompressor (2) vorgesehen ist.

3. Kompressoraggregat nach Anspruch 2, bei dem der Radialkolbenkompressor von einem Außenläufermotor angetrieben ist, d a d u r c h   g e k e n n z e i c h n e t , daß der Außenläufer (5) des Gleichstrommotors (3) als topfförmiges Gehäuse ausgebildet ist, an dessen Innenwand die Dauermagnete (6) angeordnet sind.

4. Kompressoraggregat nach Anspruch 1, 2 oder 3, d a - d u r c h   g e k e n n z e i c h n e t , daß sowohl der Kompressor (2) als auch der Gleichstrommotor (3) einschließlich der elektronischen Kommutierungseinrichtung (4) direkt oder indirekt von dem Kältemittel des Aggregates gekühlt sind.

5. Kompressoraggregat nach Anspruch 4, d a d u r c h   g e k e n n z e i c h n e t , daß auch der Gleichspannungssteller (15) und der Gleichrichter (17) in die Kapsel (1) integriert und von dem Kältemittel gekühlt sind.

FIG 1

FIG 2

# 0092751

**EUROPÄISCHER RECHERCHENBERICHT**

**Europäisches Patentamt**

EP 83 10 3683

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 933 437 (SIEGAS METALLWARENFABRIK W. LOH GMBH) * Ansprüche 1, 8, 9 * | 1 | F 25 B 31/02<br>H 02 P 6/02 |
| Y | GB-A-2 071 440 (SONY CORP.) * Ansprüche 1-5; Figur 5 * | 1 | |
| A | DE-A-2 950 046 (E. GAUS) * Ansprüche 1, 2, 4 * | 1 | |

|  |  |
|---|---|
| | **RECHERCHIERTE SACHGEBIETE (Int. Cl. 3)** |
| | F 25 B 29/00<br>F 25 B 31/02<br>F 25 B 49/00<br>H 02 P 6/02<br>H 02 P 13/32 |

Der vorliegende Recherchenbericht wurde für alle Patentansprüche erstellt.

| Recherchenort<br>BERLIN | Abschlußdatum der Recherche<br>14-07-1983 | Prüfer<br>FAORO G |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82